# EUROPÄISCHE PATENTSCHRIFT

(11) **EP 1 234 892 B1**
(45) Veröffentlichungstag und Bekanntmachung des Hinweises auf die Patenterteilung: **07.06.2006**
(21) Anmeldenummer: 02003485.6
(22) Anmeldetag: 15.02.2002
(51) Int. Cl.: C22B 7/00, C22B 1/243, F28D 20/00, F24H 7/00, C04B 35/01

(54) **VERWENDUNG EINES AUS EISENZUNDER HERGESTELLTEN SPEICHERSTEINS FÜR EIN ELEKTROSPEICHERHEIZGERÄT**
USE OF A STORAGE BLOCK MADE OF MILL SCALE FOR AN ELECTRICAL STORAGE HEATING APPARATUS
UTILISATION D'UN BLOC ACCUMULATEUR DE CHALEUR FABRIQUE A PARTIR DE CALAMINE POUR APPAREIL DE CHAUFFAGE ELECTRIQUE A ACCUMULATION

(30) Priorität: 23.02.2001 DE 10108738
(43) Veröffentlichungstag der Anmeldung: 28.08.2002
(73) Patentinhaber: KKW Kulmbacher Klimageräte-Werk GmbH, 95326 Kulmbach (DE)
(72) Erfinder: Asperger, Lutz, Dr., 95326 Kulmbach (DE); Bareuther, Helmut, 95497 Goldkronach (DE)
(74) Vertreter: Hosbach, Hans Ulrich

(56) Entgegenhaltungen:
- EP-A- 0 429 875
- EP-A- 0 794 161
- DD-A- 254 381
- DE-A- 1 948 447
- DE-A- 3 149 013
- DE-A- 3 413 679
- DE-B- 2 851 083

## Beschreibung

Die Erfindung betrifft eine Verwendung eines unter Verwendung von Eisenzunder hergestellten Speichersteins.

Aus der Patentschrift DD 254 381 A1, welche das Gebiet der Schwarzmetallurgie betrifft, ist ein Verfahren zur Wiederverwendung hocheisenoxidhaltiger Anfallmaterialien für metallurgische Zwecke bekannt. Die Druckschrift befaßt sich mit einigen in der schwarzmetallurgie, insbesondere im Hochofenbereich, auftretenden Problemen und führt unter anderem aus, daß es bekannt sei, die hocheisenoxidhaltigen Anfallmaterialien, die unter anderem Walzzunder umfassen können, im metallurgischen prozeß als Entkohlungsmittel oder Eisenträger wiederzuverwenden. Die Druckschrift stellt sich dann das Ziel, die hocheisenoxidhaltigen Anfallmaterialien metallurgisch zu nutzen und gleichzeitig den Energiebedarf zu senken. Die Druckschrift schlägt vor, die Feuerfestauskleidung und/oder Wärmespeichersteine im Hochofen zumindest anteilig aus den hocheisenoxidhaltigen Anfallmaterialien, wie beispielsweise Walzzunder, herzustellen. Durch die Auskleidung des Hochofens mit einer Feuerfestauskleidung aus hocheisenoxidhaltigen Anfallmaterialien (anstelle der als bekannt geschilderten eisenoxidfreien oder -armen Feuerfestauskleidungen) ist es möglich, die Auskleidung nach Beendigung ihrer Funktion als Feuerfestmaterial auszubrechen und dann als Einsatzmaterial für den Hochofenprozeß oder als Frischmittel bei der Stahlerzeugung wiederzuverwenden. Zur Herstellung dieser eine doppelte Nutzung der hocheisenoxidhaltigen Anfallmaterialien erlaubenden Feuerfestauskleidung werden die Anfallmaterialien unter Zugabe mineralischer Zuschlagstoffe und/oder hydraulischer, chemischer oder keramischer Bindemittel zu Feuerfestformkörpern geformt. Beim Einsatz dieser Formkörper im Hochofen werden die in den Materialien enthaltenen Bestandteile, wie Wasser oder organische Verunreinigingen, beispielsweise Öle, ausgetrieben. Wärmetechnisch haben die aus hocheisenoxidhaltigen Anfallmaterialien herstellten Feuerfestauskleidungen/wärmespeichersteine, welche die Innenwandungen des Hochofens belegen, die Funktion, die äußeren Wandungen vor zu hohen Temperaturen zu schützen, d.h. wärmedämmend zu wirken. "Wärmespeicherung" meint hier weniger den physikalischen Vorgang, bei dem zu einem ersten Zeitpunkt Wärme aufgenommen wird, die zu einem späteren Zeitpunkt wieder abgegeben werden soll. Vielmehr versteht man unter Wärmespeicherung im Zusammenhang mit Wandauskleidungen von Hochöfen, daß die inneren Schichten der Hochofenwandungen Wärmeenergie aufnehmen (sich erhitzen) und diese dann abstrahlen, wobei eine Wärmedämmung dadurch erzielt wird, daß ein großer Teil der gespeicherten Wärme wieder in den Innenraum zurückgestrahlt wird.

In Kernen von Elektrospeicherheizgeräten werden Speichersteine verwendet, um Wärmenergie zu speichern. Beispielsweise beschreibt die DE 34 13 679 A1 Speichersteine für Elektrospeicherheizgeräte aus Eisenoxid, insbesondere Magnetit, oder aus Olivin. Speichersteine für Elektrospeicherheizgeräte sollten eine möglichst hohe Wärmeenergie bei geringem Speichervolumen speichern.

Aufgabe der Erfindung ist es, kostengünstige Speichersteine für Elektrospeicherheizgeräte zur Verfügung zu stellen. Die Aufgabe wird erfindungsgemäß durch die Verwendung von Speichersteinen nach Anspruch 1 gelöst.

Grundgedanke der Erfindung ist die Verwendung von Eisenzunder für die Herstellung der Speichersteine.

Eisenzunder fällt als Oxydationsprodukt in der Eisenmetallurgie in großen Mengen an und ist somit relativ preiswert. Er besteht aus einer Mischung von Eisenoxiden (FeO, Fe₃O₄ und Fe₂O₃). Erfindungsgemäß wird der Eisenzunder bei einer vorgegebenen Partikelgrößenverteilung bereitgestellt, mit einem Bindemittel gemischt und die so erzeugte Mischung zu einem Speicherstein geformt.

Eine bevorzugte weiterbildung des erfindungsgemäßen Verfahrens ist dadurch gekennzeichnet, daß der Eisenzunder bei seiner Bereitstellung entölt wird. Vorzugsweise wird ferner die vorgegebene Partikelgrößenverteilung durch Einstellen einer Siebkurve erzielt. Das heißt, der Eisenzunder wird zerkleinert bzw. gemahlen und die so gebildeten Partikel werden gesiebt, um die gewünschte Partikelgrößenverteilung zu erreichen.

Bei einem Ausführungsbeispiel wird der Speicherstein geformt, indem die Eisenzunder-Bindemittel-Mischung in eine Form gegossen und aushärten gelassen wird. Bei einer alternativen Ausführungsform wird die erzeugte Mischung in eine Form gefüllt und gepreßt. Anschließend wird die gepreßte Mischung beispielsweise gebrannt und dann entformt. Alternativ wird nach dem Pressen ein so gebildeter Rohling aus der Form entfernt und danach gebrannt.

Das verwendete Bindemittel ist vorzugsweise ein keramisches Bindemittel.

Vorteilhafte Weiterbildungen der Erfindung sind in den Unteransprüchen gekennzeichnet.

Im folgenden wird ein bevorzugtes Herstellungsverfahren detailliert beschrieben.

Zur Herstellung des Speichersteins werden zunächst Eisenzunder und ein geeignetes Bindemittel bereitgestellt. Sofern der Eisenzunder noch nicht die gewünschte Korngrößenverteilung aufweist, wird er gemahlen und/oder entsprechend gesiebt. Somit wird vor dem Zumischen des Bindemittels ein Eisenzunder hergestellt, der vorzugsweise Partikel mit einem Durchmesser von 0,01 mm bis etwa 4 mm aufweist, wobei ein Anteil von etwa 40-50 Gew.-% im Bereich von 0,5 mm bis 4 mm Durchmesser liegt. Der Eisenzunder wird anschließend mit einem Bindemittel intensiv durchmischt. Als Bindemittel kommen Tone, Silikate, Phosphate, beispielsweise Monoaluminiumphosphat, und Sulfate, beispielsweise Aluminiumsulfat, in Frage. Sofern dies erwünscht ist, werden noch weitere Komponenten zugemischt. Vorzugsweise werden 85-99 Gew.-% Eisenzunder mit 1-15 Gew.-% Bindemittel gemischt.

Anschließend wird die Rohmasse in eine Form gepreßt und der Preß-Rohling bei einer Temperatur von etwa 800-1000° C gebrannt.

## Patentansprüche

1. Verwendung eines Speichersteins als Wärmespeicher in einem Elektrospeicherheizgerät,wobei der Speicherstein zu mehr als 50 % aus Eisenzunder besteht und wobei der Speicherstein hergestellt ist, indem:
a) Eisenzunder einer vorgegebenen Partikelgrößenverteilung bereitgestellt wird,
b) der Eisenzunder mit einem Bindemittel gemischt wird und
c) aus der so erzeugten Mischung der Speicherstein geformt wird.

2. Verwendung eines Speichersteins nach Anspruch 1, **dadurch gekennzeichnet, daß** bei dessen Herstellung der Eisenzunder im Schritt a) entölt wird.

3. Verwendung eines Speichersteins nach Anspruch 1 oder 2, **dadurch gekennzeichnet, daß** die vorgegebene Partikelgrößenverteilung durch Einstellen einer Siebkurve erzielt wird, wobei vorzugsweise eine Partikelgrößenverteilung erzielt wird, bei der die Partikelkorngrößen im Bereich von 0,01 mm bis 4 mm liegen, wobei etwa 40 bis 50% der Partikelkorngrößen im Bereich von 0,5 mm bis 4 mm haben.

4. Verwendung eines Speichersteins nach einem der Ansprüche 1 bis 3, **dadurch gekennzeichnet, daß** bei dessen Herstellung die im Schritt b) erzeugte Mischung im Schritt c) in eine Form gegossen und aushärten gelassen wird.

5. Verwendung eines Speichersteins nach einem der Ansprüche 1 bis 3, **dadurch gekennzeichnet, daß** bei dessen Herstellung die im Schritt b) erzeugte Mischung im Schritt c) in eine Form eingefüllt und gepreßt wird.

6. Verwendung eines Speichersteins nach Anspruch 5, **dadurch gekennzeichnet, daß** bei seiner Herstellung die Mischung nach dem Pressen gebrannt und anschließend entformt wird.

7. Verwendung eines Speichersteins nach Anspruch 5, **dadurch gekennzeichnet, daß** bei dessen Herstellung nach dem Pressen der so gebildete Rohling aus der Form entfernt und anschließend gebrannt wird.

8. Verwendung eines Speichersteins nach Anspruch 6 oder 7, **dadurch gekennzeichnet, daß** bei dem Brennen die Einbrenntemperatur im Bereich von 800 - 1000° C liegt.

9. Verwendung eines Speichersteins nach Anspruch 1, **dadurch gekennzeichnet, daß** der Speicherstein ein Bindemittel, vorzugsweise ein keramisches Bindemittel enthält.

10. Verwendung eines Speichersteins nach Anspruch 9, **dadurch gekennzeichnet, daß** der Speicherstein 85 bis 99 Gew.-% Eisenzunder und 1 - 15 Gew.-% Bindemittel enthält.

## Claims

1. The use of a storage block as a thermal store in an electrical storage heating device, wherein the storage block consists of mill scale to an extent of more than 50% and wherein the storage block is manufactured by:
a) providing mill scale of a predetermined particle size distribution,
b) mixing the mill scale with a bonding agent and
c) forming the storage block from the mixture thus produced.

2. The use of a storage block as claimed in claim 1, **characterised in that** during its manufacture the iron scale is de-oiled in step a).

3. The use of a storage block as claimed in claim 1 or 2, **characterised in that** the predetermined particle size distribution is achieved by setting a particle size curve, whereby a particle size distribution is preferably achieved in which the particle grain sizes are in the range of 0.01mm to 4 mm, about 40 to 50% of the particle grain sizes being in the range of 0.5mm to 4mm.

4. The use of a storage block as claimed in claims 1 to 3, **characterised in that**, in its manufacture, the mixture produced in step b) is poured in step c) into a mold and allowed to set.

5. The use of the storage block as claimed in one of claims 1 to 3, **characterised in that**, in its manufacture, the mixture produced in step b) is introduced in step c) into a mold and pressed.

6. The use of a storage block as claimed in claim 5, **characterised in that**, in its manufacture, the mixture is fired after the pressing process and subsequently de-molded.

7. The use of a storage block as claimed in claim 5, **characterised in that**, in its manufacture, after the pressing process the unfinished article thus formed is removed from the mold and is subsequently fired.

8. The use of a storage block as claimed in claimed 6 or 7, **characterised in that** during the firing process the firing temperature is in the range of 800-1,000 ° C.

9. The use of a storage block as claimed in claim 1, **characterised in that** the storage block includes a bonding agent, preferably a ceramic bonding agent.

10. The use of a storage block as claimed in claim 9, **characterised in that** the storage block contains 85-99% by wt. mill scale and 1-15% by wt. bonding agent.

## Revendications

1. Utilisation d'une pierre accumulatrice comme accumulateur de chaleur dans un appareil de chauffage électrique à accumulation, la pierre accumulatrice étant composée de plus de 50 % de calamine de fer et la pierre accumulatrice étant fabriquée en
a) fournissant de la calamine de fer avec une distribution prédéfinie de la taille des particules,
b) mélangeant la calamine de fer avec un liant et
c) façonnant la pierre accumulatrice à partir du mélange ainsi produit.

2. Utilisation d'une pierre accumulatrice selon la revendication 1, **caractérisée en ce que** lors de sa fabrication, la calamine de fer est déshuilée dans l'étape a).

3. Utilisation d'une pierre accumulatrice selon la revendication 1 ou 2, **caractérisée en ce que** la distribution prédéfinie de la taille des particules est obtenue en réglant une courbe de tamisage, la distribution obtenue de la taille des particules étant de préférence telle que la granulométrie des particules est comprise entre 0,01 mm et 4 mm, environ 40 à 50 % des granulométries des particules étant comprises entre 0,5 mm et 4 mm.

4. Utilisation d'une pierre accumulatrice selon l'une des revendications 1 à 3, **caractérisée en ce que** lors de sa fabrication, le mélange produit dans l'étape b) est coulé dans un moule dans l'étape c) et laissé durcir.

5. Utilisation d'une pierre accumulatrice selon l'une des revendications 1 à 3, **caractérisée en ce que** lors de sa fabrication, le mélange produit dans l'étape b) est coulé dans un moule dans l'étape c) et compressé.

6. Utilisation d'une pierre accumulatrice selon la revendication 5, **caractérisée en ce que** lors de sa fabrication, le mélange est cuit après la compression et ensuite démoulé.

7. Utilisation d'une pierre accumulatrice selon la revendication 5, **caractérisée en ce que** lors de sa fabrication, l'ébauche ainsi formée est retirée du moule après la compression et ensuite cuite.

8. Utilisation d'une pierre accumulatrice selon la revendication 6 ou 7, **caractérisée en ce que** lors de la cuisson, la température de cuisson est comprise entre 800 et 1000 °C.

9. Utilisation d'une pierre accumulatrice selon la revendication 1, **caractérisée en ce que** la pierre accumulatrice contient un liant, de préférence un liant en céramique.

10. Utilisation d'une pierre accumulatrice selon la revendication 9, **caractérisée en ce que** la pierre accumulatrice contient 85 à 99 % en poids de calamine de fer et 1 à 15 % en poids de liant.
